# FASCICULE DE BREVET EUROPEEN

(11) **EP 2 999 741 B1**
(45) Date de publication et mention de la délivrance du brevet: **22.03.2017**
(21) Numéro de dépôt: 14719007.8
(22) Date de dépôt: 23.04.2014
(51) Int. Cl.: C08K 3/36, B60C 1/00, C08K 3/00, C08L 7/00

(54) **MELANGE INTERNE POUR PNEUMATIQUE A RESISTANCE A LA FISSURATION AMELIOREE**
INTERNE MISCHUNG FÜR EINEN REIFEN MIT VERBESSERTER RISSBESTÄNDIGKEIT
INTERNAL MIXTURE FOR A TYRE HAVING IMPROVED CRACKING RESISTANCE

(30) Priorité: 23.05.2013 FR 1354666
(43) Date de publication de la demande: 30.03.2016
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: NAKASHIMA, Yasufumi, Tokyo 163-1073 (JP); PAGANO, Salvatore, F-63040 Clermont-Ferrand Cedex 9 (FR)
(74) Mandataire: Ribière, Joel
(86) Numéro de dépôt international: PCT/EP2014/058269
(87) Numéro de publication internationale: WO 2014/187640

(56) Documents cités:
- FR-A1- 2 925 914
- YIJING NIE, GUANGSU HUANG, LIANGLIANG QU, PENG ZHANG, GENGSHENG WENG AND JINRONG WU: "Structural evolution during uniaxial deformation of natural rubber reinforced with nano-alumina", POLYM. ADV. TECHNOL., no. 22, 26 avril 2010 (2010-04-26), - 26 avril 2010 (2010-04-26), pages 2001-2008, XP002715644,
- DATABASE WPI Week 201240 Thomson Scientific, London, GB; AN 2012-D89307 XP002715645, & CN 102 382 338 A (ZHUZHOU TIMES NEW MATERIALS TECHNOLOGY C) 21 mars 2012 (2012-03-21)
- S. OSTAD-MOVAHED, K. ANSAR YASIN, A. ANSARIFAR, M. SONG, S. HAMEED: "Comparing Effects of Silanized Silica Nanofiller on the Crosslinking and Mechanical Properties of Natural Rubber and Synthetic Polyisoprene", JOURNAL OF APPLIED POLYMER SCIENECE, vol. 109, 10 avril 2008 (2008-04-10), - 10 avril 2008 (2008-04-10), pages 869-881, XP002715646,
- FARHAN SAEED, ALI ANSARIFAR, ROBERT J. ELLIS, YARED HAILE-MESKEL, M. SHAFIQ IRFAN: "Two Advanced Styrene-Butadiene/Polybutadiene Rubber Blends Filled with a Silanized Silica Nanofiller for Potential Use in Passenger Car Tire Tread Compositions", JOURNAL OF APPLIED POLYMER SCIENCE, vol. 123, 17 août 2011 (2011-08-17), - 17 août 2011 (2011-08-17), pages 1518-1529, XP002715647,

## Description

### 1. DOMAINE DE L'INVENTION

Le domaine de la présente invention est celui des compositions de caoutchouc utilisées comme mélanges internes dans les pneumatiques pour véhicules, en particulier dans les armatures de sommet ou « ceintures » de ces pneumatiques.

La présente invention est plus particulièrement relative à la protection de ces mélanges internes contre les risques de fissuration liés notamment au vieillissement thermo-oxydant, dans les ceintures des pneumatiques à armature de carcasse radiale.

### 2. ETAT DE LA TECHNIQUE

On rappellera tout d'abord brièvement qu'un pneumatique à armature de carcasse radiale comporte, de manière connue, une bande de roulement, deux bourrelets inextensibles, deux flancs reliant les bourrelets à la bande de roulement et une ceinture disposée circonférentiellement entre l'armature de carcasse et la bande de roulement, cette ceinture étant constituée de diverses nappes (ou "couches") de caoutchouc renforcées ou non par des éléments de renforcement (ou "renforts") tels que des câblés ou des monofilaments, du type métalliques ou textiles.

La ceinture de pneumatique est généralement constituée d'au moins deux couches ou nappes de ceinture superposées, dites parfois nappes "de travail" ou nappes "croisées", dont les renforts sont disposés pratiquement parallèles les uns aux autres à l'intérieur d'une couche, mais croisés d'une couche à l'autre, c'est-à-dire inclinés, symétriquement ou non, par rapport au plan circonférentiel médian, d'un angle qui est généralement compris entre 10° et 45° selon le type de pneumatique considéré. Chacune de ces deux couches croisées est constituée d'une matrice de caoutchouc généralement à base isoprénique, dite parfois "gomme de calandrage", enrobant les renforts. Les couches croisées peuvent être complétées par diverses autres nappes ou couches de caoutchouc auxiliaires, de largeurs variables selon les cas, comportant ou non des renforts ; on citera à titre d'exemple de simples coussins de gomme, des couches dites "de protection" chargées de protéger le reste de la ceinture des agressions externes, des perforations, ou encore des couches dites "de frettage" comportant des renforts orientés sensiblement selon la direction circonférentielle (couches dites "à zéro degré"), qu'elles soient radialement externes ou internes par rapport aux couches croisées.

Cette ceinture de pneumatique doit satisfaire de manière connue à de nombreuses exigences, parfois contradictoires, notamment :
(i) être la plus rigide possible à faible déformation, car elle contribue d'une manière substantielle à rigidifier le sommet du pneumatique ;
(ii) avoir une hystérèse aussi basse que possible, pour d'une part minimiser l'échauffement en roulage de la zone interne du sommet et d'autre part réduire la résistance au roulement du pneumatique, synonyme d'économie de carburant ;
(iii) enfin posséder une endurance élevée, en particulier vis-à-vis du phénomène de séparation ou fissuration des extrémités des couches croisées dans la zone "d'épaule" du pneumatique, problème connu sous le terme de "clivage".

La troisième condition exige notamment des compositions de caoutchouc entrant dans la constitution des ceintures des pneumatiques qu'elles présentent une résistance très élevée à la propagation des fissures et à la thermo-oxydation.

Cette exigence est particulièrement forte pour les enveloppes de pneumatiques Poids-lourd, conçues comme on le sait pour pouvoir être rechapées une ou plusieurs fois lorsque les bandes de roulement qu'elles comportent atteignent un degré d'usure critique après un roulage prolongé. Elle est également forte, de manière générale, pour tout pneumatique, qu'il soit notamment du type tourisme comme du type Poids-lourd, susceptible d'être soumis à des conditions de roulage particulièrement sévères sous une atmosphère humide et corrosive.

C'est la raison pour laquelle les concepteurs de pneumatiques sont constamment à la recherche de solutions efficaces et peu coûteuses permettant d'améliorer la résistance des vulcanisats de caoutchouc à la propagation de fissures dues notamment au vieillissement thermo-oxydant.

### 3. BREVE DESCRIPTION DE L'INVENTION

Or, au cours de leurs recherches, les Demanderesses ont découvert une composition de caoutchouc de formulation spécifique qui présente une résistance améliorée à la propagation de fissures, offrant ainsi aux pneumatiques et à leurs compositions internes, notamment à leurs ceintures, une longévité améliorée.

En conséquence, un premier objet de l'invention concerne un pneumatique comprenant une composition de caoutchouc interne comportant au moins :
- 50 à 100 pce d'un élastomère isoprénique ;
- optionnellement, 0 à 50 pce d'un autre élastomère diénique ;
- 0 à moins de 15 pce d'un noir de carbone ;
- entre 40 et 100 pce d'une charge inorganique nanométrique,
ce pneumatique étant caractérisé en ce que la composition de caoutchouc interne est dépourvue ou comporte moins de 2 %, exprimés par rapport au poids de charge inorganique nanométrique, d'agent de couplage (élastomère / charge inorganique).

L'invention concerne des bandages de tout type, pneumatiques ou non pneumatiques, notamment des bandages destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" c'est-à-dire métro, bus, engins de transport routier (camions, tracteurs, remorques), véhicules hors-la-route tels qu'engins agricoles ou de génie civil, autres véhicules de transport ou de manutention.

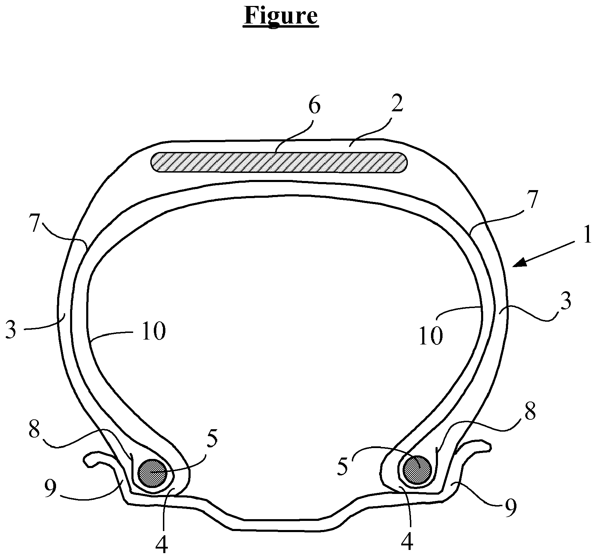

L'invention ainsi que ses avantages seront aisément compris à la lumière de la description et des exemples de réalisation qui suivent, ainsi que de la figure unique relative à ces exemples qui schématise en coupe radiale, un exemple de pneumatique à armature de carcasse radiale conforme à l'invention, incorporant une composition interne selon l'invention.

### 4. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'abréviation "pce" (usuellement "*phr*" en anglais) signifie parties en poids pour cent parties d'élastomère ou caoutchouc (du total des élastomères si plusieurs élastomères sont présents).

L'invention a donc pour objet un pneumatique comprenant au moins une composition de caoutchouc dite « interne », c'est-à-dire par définition et de manière connue qui n'est pas au contact de l'air ni d'un gaz de gonflage, dont la résistance à la fissuration est améliorée et qui comporte au moins :
- 50 à 100 pce d'un (au moins un, c'est-à-dire un ou plusieurs) élastomère isoprénique ;
- optionnellement, 0 à 50 pce d'un (au moins un, c'est-à-dire un ou plusieurs) autre élastomère diénique ;
- 0 à moins de 15 pce d'un (au moins un, c'est-à-dire un ou plusieurs) noir de carbone ;
- entre 40 et 100 pce d'une (au moins une, c'est-à-dire une ou plusieurs) charge inorganique nanométrique,
ce pneumatique étant caractérisé en ce que cette composition interne est dépourvue ou comporte moins de 2%, exprimés par rapport au poids de charge inorganique nanométrique, d'un agent de couplage (élastomère / charge inorganique).

Tous les constituants ci-dessus sont décrits en détail ci-après.

### 4.1. Elastomère isoprénique

Par élastomère (ou caoutchouc, les deux étant considérés synonymes) du type "diénique", on entend de manière générale un élastomère issu au moins en partie (i.e., un homopolymère ou un copolymère) de monomères diènes, c'est-à-dire de monomères porteurs de deux doubles liaisons carbone-carbone (conjuguées ou non).

Cette définition générale étant donnée, on entend dans la présente demande par "élastomère isoprénique" un homopolymère ou copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, en particulier supérieur à 95%, plus préférentiellement encore supérieur à 98%.

Selon une variante de réalisation de l'invention, l'élastomère isoprénique est utilisé seul, c'est-à-dire sans coupage avec un autre élastomère diénique. Plus préférentiellement encore, cet élastomère isoprénique est exclusivement du caoutchouc naturel.

### 4.2. Autre élastomère diénique optionnel

Selon une autre variante de réalisation de l'invention, l'élastomère isoprénique peut être utilisé en coupage, c'est-à-dire en mélange, avec un second élastomère diénique autre qu'un élastomère isoprénique.

Ainsi, les compositions selon l'invention peuvent contenir 0 à 50 pce d'un second élastomère diénique autre que cet élastomère isoprénique, de préférence à titre minoritaire (c'est-à-dire à un taux inférieur à 50 pce). L'élastomère isoprénique représente plus préférentiellement 75 à 100% en poids du total d'élastomères diéniques, soit 75 à 100 pce (parties en poids pour cent parties d'élastomère).

A titre d'élastomères diéniques autres qu'isopréniques, on citera notamment les polybutadiènes (BR), en particulier les polybutadiènes cis-1,4 ou 1,2-syndiotactique et ceux ayant une teneur en unités-1,2 comprise entre 4% et 80%, et les copolymères de butadiène tels que copolymères styrène-butadiène (SBR), copolymères styrène-butadiène-isoprène (SBIR) et les mélanges de tels homopolymères ou copolymères de butadiène. On citera notamment les copolymères SBR ayant une teneur en styrène entre 5 et 50% et plus particulièrement entre 20% et 40%, une teneur en liaisons -1,2 de la partie butadiénique comprise entre 4% et 65%, une teneur en liaisons trans-1,4 comprise entre 30% et 80%.

Comme exemples de compositions internes convenant à l'invention, on citera notamment des compositions comportant, à titre de second élastomère diénique, des copolymères SBR à haute température de transition vitreuse (Tg), notamment supérieure à -40°C, pour leurs propriétés de barrière à l'eau notamment en présence d'une charge lamellaire (e.g. graphite, talc ou mica) (voir WO 2011/147710), pour leurs propriétés de réduction du bruit en présence d'une résine plastifiante hydrocarbonée (voir WO 2011/147712 ou WO 2011/147713), voire des SBR à très haute Tg (supérieure à -10°C) pour leurs propriétés de barrière au son (voir WO 2011/147711).

### 4.3. Noir de carbone (optionnel)

La composition interne du pneumatique de l'invention est dépourvue de noir de carbone ou en comporte moins de 15 pce, préférentiellement moins de 12 pce. Plus préférentiellement, on utilise entre 2 et 10 pce, en particulier de 3 à 7 pce, de noir de carbone.

Comme noirs de carbone conviennent tous les noirs de carbone conventionnellement utilisés dans les pneumatiques (noirs dits de grade pneumatique), comme par exemple des noirs de carbone renforçants des séries (grades ASTM) 100, 200, 300, ou des noirs de séries supérieures, en particulier 500, 600, 700 ou 800 (comme par exemple les noirs N550, N660, N683, N772, N774). Les noirs de carbone pourraient être par exemple déjà incorporés à un élastomère diénique, notamment isoprénique sous la forme d'un masterbatch (voir par exemple demandes WO 97/36724 ou WO 99/16600).

Les noirs de carbone peuvent être utilisés à l'état isolé, tels que disponibles commercialement, ou sous tout autre forme, par exemple et de manière connue comme support de certains des additifs de caoutchouterie utilisés.

### 4.4. Charge inorganique nanométrique

Par charge inorganique du type nanométrique, doit être compris de manière connue toute charge inorganique, quelles que soient sa couleur et son origine (naturelle ou de synthèse), parfois appelée "charge minérale", "charge blanche", "charge claire" ou encore "charge non-noir" par opposition au noir de carbone (par définition, considéré ici comme une charge organique), qui est formée de nanoparticules c'est-à-dire de particules dont la taille moyenne en masse est par définition inférieure à 1 µm, de préférence inférieure à 500 nm, en particulier comprise entre 20 et 200 nm.

De telles charges inorganiques nanométriques sont bien connues de l'homme du métier, capables de renforcer, en présence d'un agent de couplage, des compositions de caoutchouc pour pneumatiques, en d'autres termes aptes à remplacer, dans une fonction de renforcement, un noir de carbone conventionnel de grade pneumatique ; de telles charges se caractérisent généralement, de manière connue, par la présence de groupes hydroxyle (-OH) à leur surface.

De manière préférentielle, le taux de charge inorganique nanométrique, en particulier de silice, est compris entre 50 et 100 pce, notamment entre 50 et 90 pce.

L'état physique sous lequel se présente cette charge est indifférent, que ce soit sous forme de poudre, de microperles, de granulés, de billes ou toute autre forme densifiée appropriée.

Conviennent notamment des charges minérales du type silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. Les silices précipitées hautement dispersibles (dites "HDS") sont particulièrement utilisées, en particulier lorsque l'invention est mise en oeuvre pour la fabrication de pneus à faible résistance au roulement ; comme exemples de telles silices HDS, on peut citer les silices « Ultrasil » 7000 de la société Evonik, les silices «Zeosil» 1165 MP, 1135 MP et 1115 MP de la société Rhodia, la silice « Hi-Sil » EZ150G de la société PPG, les silices « Zeopol » 8715, 8745 ou 8755 de la Société Huber, les silices telles que décrites dans la demande WO 03/016387.

A titre d'autres exemples de charges inorganiques nanométriques susceptible d'être utilisées dans les compositions internes selon l'invention peuvent être encore cités des alumines, des (oxyde)hydroxydes d'aluminium, des aluminosilicates, des oxydes de titane, des carbures ou nitrures de silicium, tous du type renforçants en présence d'un agent de couplage, tels que décrits par exemple dans les demandes WO 99/28376, WO 00/73372, WO 02/053634, WO 2004/003067, WO 2004/056915.

La taille moyenne en masse peut être mesurée de manière bien connue, après dispersion par désagglomération aux ultrasons de la charge à analyser dans l'eau (ou solution aqueuse contenant un agent tensioactif), par exemple au moyen d'un sédimentomètre centrifuge à détection rayons X type « XDC » (*X-rays Disk Centrifuge*), commercialisé par la société Brookhaven Instruments, selon le mode opératoire qui suit : on réalise une suspension de 3,2 g d'échantillon de charge inorganique à analyser dans 40 ml d'eau, par action durant 8 min, à 60% de puissance (60% de la position maxi du *"output control*"), d'une sonde ultrasons de 1500 W (sonificateur Vibracell 3/4 pouce commercialisé par la société Bioblock); après sonification, on introduit 15 ml de la suspension dans le disque en rotation ; après sédimentation pendant 120 min, la distribution en masse des tailles de particules et la taille moyenne en masse des particules d_{w} sont calculées par le logiciel du sédimentomètre XDC.

La surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

### 4.5. Agent de couplage

De manière bien connue de l'homme du métier, pour coupler une charge inorganique nanométrique à un élastomère diénique et la rendre ainsi renforçante vis-à-vis de la matrice de caoutchouc la contenant, on utilise habituellement un agent de couplage, encore appelé agent de liaison, destiné à assurer une connexion suffisante, de nature chimique et/ou physique, entre la charge (surface de ses particules) et l'élastomère diénique.

Un tel agent de couplage, par définition au moins bifonctionnel, a pour formule générale simplifiée « Y-A-X », dans laquelle:
- Y représente un groupe fonctionnel (fonction « Y ») qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction « X ») capable de se lier physiquement et/ou chimiquement à l'élastomère diénique, par exemple par l'intermédiaire d'un atome de soufre;
- A représente un groupe divalent permettant de relier Y et X.

Les agents de couplage ne doivent en particulier pas être confondus avec de simples agents de recouvrement de la charge inorganique qui, de manière connue, peuvent comporter la fonction « Y » active vis-à-vis de la charge inorganique mais sont dépourvus de la fonction « X » active vis-à-vis de l'élastomère diénique.

Sont habituellement utilisés des organosilanes ou polyorganosiloxanes bifonctionnels, le plus souvent des silanes polysulfurés, dits "symétriques" ou "asymétriques" selon leur structure particulière, tels qu'ils ont été décrits dans de très nombreux documents brevets (voir par exemple WO 03/002648, WO03/002649 ou WO 2004/033548).

Pour rappel, les plus utilisés sont des silanes polysulfurés dits "symétriques" répondant à la formule générale (I) suivante:

(I) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 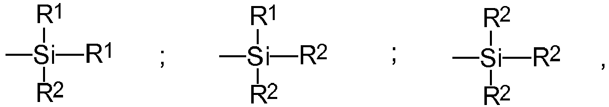 dans lesquelles :
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, est utilisé en particulier le tétrasulfure de bis(3-triéthoxysilylpropyl), en abrégé TESPT, ou le disulfure de bis-(triéthoxysilylpropyle), en abrégé TESPD. On citera également à titre d'autres exemples possibles les polysulfures (notamment disulfures, trisulfures ou tétrasulfures) de bis-(monoalkoxyl(C₁-C₄)-dialkyl(C₁-C₄)silylpropyl), par exemple le tétrasulfure de bis-monoéthoxydiméthylsilylpropyl tel que décrit dans la demande de brevet WO 02/083782 (ou US 2004/132880).

A titre d'agents de couplage autres que des alkoxysilanes polysulfurés, on citera notamment des POS (polyorganosiloxanes) bifonctionnels ou encore des polysulfures d'hydroxysilane (R² étant OH dans la formule (I) ci-dessus) tels que décrits dans les demandes de brevet WO 02/30939 et WO 02/31041, ou encore des silanes ou POS porteurs de groupements fonctionnels azo-dicarbonyle, tels que décrits par exemple dans les demandes de brevet WO 2006/125532, WO 2006/125533, WO 2006/125534.

La composition de caoutchouc interne du pneumatique de l'invention a pour caractéristique essentielle d'être dépourvue d'agent de couplage (élastomère / charge inorganique) ou d'en comporter une très faible quantité, à savoir moins de 2% par rapport au poids de charge inorganique nanométrique.

En d'autres termes, la charge inorganique nanométrique, malgré son taux élevé (supérieur à 40 pce) et sa taille de particule nanométrique lui conférant un potentiel renforçant en présence d'un taux suffisant (supérieur à 2%, de préférence supérieur à 5%) d'un agent de couplage, n'est pas utilisée dans la composition interne de l'invention comme une charge inorganique du type renforçante ; contrairement à l'enseignement de l'état de la technique, elle est utilisée comme une charge inerte spécifique, ici du type nanométrique.

C'est dans ces conditions que l'on a observé, de manière inattendue, une protection améliorée des compositions internes contre la propagation de fissures après vieillissement thermo-oxydant.

Pour cette raison, le taux d'agent de couplage est préférentiellement inférieur à 1%, plus préférentiellement inférieur à 0,5% par rapport au poids de charge inorganique nanométrique.

Plus préférentiellement encore, la composition interne du pneu de l'invention est totalement dépourvue d'agent de couplage.

### 4.6. Additifs divers

La composition selon l'invention peut comporter également tout ou partie des additifs usuels habituellement utilisés dans les compositions de caoutchouc pour pneumatiques, comme par exemple des agents de protection tels que antiozonants chimiques, anti-oxydants, des agents plastifiants ou des huiles d'extension, que ces derniers soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des résines plastifiantes hydrocarbonées à haute Tg, des agents facilitant la mise en oeuvre (processabilité) des compositions à l'état cru, des résines tackifiantes, des résines renforçantes (tels que résorcinol ou bismaléimide), des accepteurs ou donneurs de méthylène tels que hexaméthylènetétramine ou hexaméthoxyméthylmélamine, un système de réticulation à base soit de soufre, soit de donneurs de soufre et/ou de peroxyde et/ou de bismaléimides, des accélérateurs de vulcanisation, des activateurs de vulcanisation, des systèmes promoteurs d'adhésion connus du type sels métalliques, par exemple des sels (e.g. acétylacétonates, abiétates, naphténates, tallates) de cobalt, de nickel ou de lanthanide tel que néodyme.

### 4.7. Préparation des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, phase de finition au cours de laquelle est incorporé le système de réticulation.

A titre d'exemple, la phase non-productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La composition finale ainsi obtenue peut ensuite être calandrée, par exemple sous la forme d'une feuille, d'une plaque ou encore extrudée, par exemple pour former un profilé de caoutchouc utilisable pour la fabrication d'un composite ou d'un produit semi-fini, tel que par exemple des nappes, bandes, sous-couches, autres blocs de caoutchouc renforcés ou non de renforts textiles ou métalliques, destinés à former une partie de la structure interne d'un pneumatique.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les pneumatiques tant à l'état cru (c'est-à-dire avant cuisson) qu'à l'état dit cuit ou vulcanisé (c'est-à-dire après cuisson).

### 5. EXEMPLES DE REALISATION DE L'INVENTION

### 5.1. Pneumatique selon l'invention

La composition de caoutchouc de l'invention précédemment décrite est utilisable comme mélange interne de tout type de bandage pour véhicules automobiles.

Par composition (ou mélange) "intérieure" ou "interne", on entend ici toute partie en caoutchouc du pneumatique qui ne donne pas sur l'extérieur du pneumatique, en d'autres termes qui n'est pas au contact de l'air ou d'un gaz de gonflage, qui est donc située à l'intérieur même de la structure du pneumatique ; à titre d'exemples, on citera notamment les mélanges présents dans la zone bourrelet, l'armature de carcasse ou l'armature de sommet ou ceinture du pneumatique.

Par composition (ou mélange) "extérieure" ou "externe", on entend a contrario toute partie en caoutchouc du pneumatique qui donne sur l'extérieur du pneumatique, en d'autres termes qui est contact de l'air ou d'un gaz de gonflage ; on citera par exemple la bande de roulement, les flancs ou encore la couche d'étanchéité du pneumatique.

A titre d'exemple, la figure annexée représente de manière très schématique une coupe radiale d'un pneumatique 1 à armature de carcasse radiale conforme à l'invention, destiné par exemple à un véhicule Poids-lourd ou à un véhicule tourisme dans cette représentation très générale.

Ce pneumatique 1 comporte un sommet 2, deux flancs 3, deux bourrelets 4, une armature de carcasse 7 s'étendant d'un bourrelet à l'autre. Le sommet 2, surmonté d'une bande de roulement (non représentée sur cette figure schématique, pour simplification), est de manière connue en soi renforcé par une armature de sommet ou ceinture 6 constituée par exemple d'au moins deux nappes sommet croisées superposées (nappes sommet dites "de travail"), recouvertes éventuellement d'au moins une nappe de protection ou une nappe sommet de frettage à zéro degré. L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Bien entendu, ce pneumatique 1 comporte en outre de manière connue une couche de gomme ou élastomère 10, communément appelée gomme ou couche d'étanchéité, qui définit la face radialement interne du pneumatique et qui est destinée à protéger la nappe de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renforcement (non représentée sur la figure) qui est située entre la nappe de carcasse et la couche d'étanchéité.

Le pneumatique conforme à l'invention a pour caractéristique essentielle de comporter dans sa structure interne au moins une composition intérieure selon l'invention. Cette composition intérieure peut être par exemple une partie interne de la zone bourrelet 4 comportant la tringle 5, constituer la matrice de caoutchouc d'une nappe sommet croisée ou d'une nappe de protection de l'armature de sommet ou ceinture 6, ou encore une nappe formant tout ou partie de l'armature de carcasse 7.

Selon un mode de réalisation particulier de l'invention, la composition de caoutchouc de l'invention est avantageusement utilisable comme composition de calandrage dans les armatures de sommet ou ceintures 6 de tous types de bandages pneumatiques, par exemple pour véhicules Tourisme, camionnettes ou Poids-lourd. De préférence, dans un tel cas, la composition de caoutchouc de l'invention présente à l'état vulcanisé (i.e., après cuisson), un module E10 qui est supérieur à 4 MPa, plus préférentiellement compris entre 6 et 20 MPa, par exemple entre 6 et 15 MPa.

Mais elle peut aussi avoir une utilisation avantageuse dans une armature carcasse 7 d'un bandage pneumatique pour véhicule tourisme ou véhicule industriel tel que Poids-lourd ; de préférence, dans un tel cas, la composition de caoutchouc de l'invention présente, à l'état vulcanisé, un module E10 qui est inférieur à 9 MPa, plus préférentiellement compris entre 4 et 9 MPa.

### 5.2. Tests de caoutchouterie (vieillissement et fissuration)

Pour les besoins de ces tests, trois compositions de caoutchouc (notée ci-après C-1, C-2 et C-3) ont été préparées dont la formulation est donnée dans le tableau 1, le taux des différents produits étant exprimés en pce (parties en poids pour cent parties d'élastomère total, constitué ici de 100 pce de NR). Ces compositions sont par exemple destinées à constituer la gomme de calandrage des deux nappes sommet croisées superposées présentes dans l'armature de sommet 6 d'un pneumatique.

La composition témoin C-1 comporte essentiellement, en plus de l'élastomère et de la charge renforçante, un antioxydant, de l'acide stéarique, de l'oxyde de zinc, du soufre, un accélérateur sulfénamide, un dérivé guanidique (DPG), un agent antéversion, et un sel de cobalt à titre de promoteur d'adhésion vis-à-vis d'un renfort métallique. Sa charge renforçante est constituée de noir de carbone (60 pce) auquel est ajoutée une faible quantité (5 pce) de silice non liée (c'est-à-dire sans agent de couplage).

La composition témoin C-2 se distingue de la composition précédente par une charge renforçante de nature différente : cette dernière est ici constituée essentiellement de charge inorganique renforçante (60 pce de silice) destinée de manière connue, grâce à son agent de couplage silane (5,5 pce soit environ 9% par rapport au poids de charge inorganique), à être liée à l'élastomère et donc à renforcer (augmenter le module en extension) de manière substantielle la composition de caoutchouc C-2.

Enfin, la composition C-3, seule conforme à l'invention, se distingue uniquement de la composition précédente C-2 par l'absence d'agent de couplage ; en d'autres termes, la charge inorganique nanométrique (silice) utilisée ici est une silice non liée à l'élastomère diénique (caoutchouc naturel), donc non destinée à renforcer la composition de caoutchouc C-3.

Pour la fabrication de ces compositions, on a procédé de la manière suivante: on a introduit dans un mélangeur interne, dont la température initiale de cuve était d'environ 60°C, successivement la charge, l'élastomère diénique (NR), ainsi que les divers autres ingrédients à l'exception du système de vulcanisation ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" de 165°C. On a récupéré le mélange ainsi obtenu, on l'a refroidi puis on a incorporé du soufre et un accélérateur type sulfénamide sur un mélangeur externe (homo-finisseur) à 30°C, en mélangeant le tout (phase productive) pendant quelques minutes.

Les compositions ainsi obtenues ont été ensuite calandrées sous la forme de plaques (épaisseur de 2 à 3 mm) pour la mesure de leurs propriétés mécaniques d'une part, puis d'éprouvettes pour la conduite de tests de fissuration et de vieillissement d'autre part.

Les propriétés en traction et à la rupture ont été reportées dans le tableau 2 annexé, après cuisson (25 min à 150°C). Elles ont été mesurées sauf indication expresse différente selon la norme ASTM D 412 de 1998 (éprouvette "C") ; on mesure en seconde élongation (i.e., après un cycle d'accommodation) les modules sécants vrais c'est-à-dire ramenés à la section réelle de l'éprouvette à 10%, 100% et 300% d'allongement, notés respectivement E10, E100 et E300 et exprimés en MPa (conditions normales de température et d'hygrométrie selon la norme ASTM D 1349 de 1999). On mesure également les contraintes à la rupture (en MPa) et les allongements à la rupture (en %).

On note que les trois compositions ont des valeurs de module et d'allongement à la rupture qui varient bien entendu en fonction de la nature de la charge (noir de carbone ou silice) et, lorsqu'il s'agit de silice, selon que cette dernière est liée ou non à l'élastomère (présence ou non de l'agent de couplage silane).

On constate en particulier que l'utilisation de silice non liée (absence d'agent de couplage), dans la composition C-3 selon l'invention, se traduit par une forte augmentation de l'allongement à la rupture sans pénalisation de la contrainte à la rupture.

Ce n'est toutefois qu'après des tests de vieillissement accéléré, puis des tests de fissuration tels que décrits ci-après, que toute l'importance de l'invention a été révélée.

Les compositions de caoutchouc du tableau 1 ont été placées, après cuisson, dans une étuve sous air à une température de 77°C, sous une humidité relative de 60%, ceci pendant une à plusieurs semaines. Puis on a suivi tout d'abord l'évolution de leur allongement à la rupture en fonction de ce vieillissement thermo-oxydant.

Les résultats apparaissent au tableau 3. A la lecture de ces résultats, on note que l'allongement à la rupture de la composition selon l'invention (C-3) est toujours supérieur à celui des deux autres compositions, d'une part à l'état initial (directement en sortie de cuisson), d'autre part après un vieillissement accéléré de une à quatre semaines environ, ceci quelle que soit la durée du vieillissement imposé. On constate qui plus est que la perte relative (exprimée en %) de l'allongement à la rupture après vieillissement est même toujours réduite par rapport aux deux autres compositions, ceci quelle que soit la durée du vieillissement accéléré (voir notamment % de perte après 27 jours, de seulement 43%).

Ce comportement amélioré de la composition selon l'invention, en termes d'évolution de l'allongement à la rupture au cours du vieillissement, laissait entrevoir une augmentation de la résistance à la fissuration, ce qui a été confirmé par des tests complémentaires de fissuration comme décrit ci-après.

La vitesse de fissuration a été mesurée sur des éprouvettes des compositions de caoutchouc C-1 à C-3, à l'aide d'une machine de fatigue cyclique (« *Elastomer Test System »)* du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouverts dans le sens de la longueur d'un bourrelet de caoutchouc cylindrique (diamètre 5 mm) permettant l'ancrage dans les mors de la machine de traction. Les éprouvettes ainsi préparées sont testées à l'état neuf et après vieillissement accéléré (comme indiqué ci-dessus). Le test a été conduit à l'air, à une température de 90°C. Après accommodation, 3 entailles très fines de longueur comprise entre 15 et 20 mm sont réalisées à l'aide d'une lame de rasoir, à mi-largeur et alignées dans le sens de la longueur de l'éprouvette, une à chaque extrémité et une au centre de cette dernière, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur égale à environ 1000 J/m². La vitesse de propagation de fissure est mesurée et exprimée en nanomètre par cycle. Bien entendu, une valeur plus faible indique une meilleure résistance à la propagation de fissure.

Les résultats sont reportés dans le tableau 4 annexé. Ces résultats montrent tout d'abord très clairement que l'utilisation conventionnelle (c'est-à-dire en présence d'un agent de couplage) de silice (composition témoin C-2), en lieu et place de noir de carbone (composition témoin C-1), permet déjà de réduire de manière très importante la vitesse de fissuration. Une telle faculté de la silice par rapport au noir de carbone était déjà connue de l'homme du métier, décrite par exemple dans les demandes EP 0 722 977 ou WO 2004/033548.

Mais ces résultats montrent surtout que, de manière inattendue, l'emploi d'un taux élevé (dans tous les cas, supérieur à 40 pce) de silice non liée dans la composition C-3 selon l'invention, permet de réduire encore notablement cette vitesse, par exemple de 2,6 fois à l'état initial (de 6,5 à 2,5 nm/cycle) à environ 7 fois après 27 jours de vieillissement accéléré (de 130 à 18 nm/cycle), comparativement à l'utilisation conventionnelle dans la composition témoin C-2 d'une même quantité de silice liée, c'est-à-dire couplée par l'intermédiaire d'un agent de couplage.

En conclusion, les tests de caoutchouterie ci-dessus démontrent clairement que l'emploi d'un taux élevé de charge inorganique renforçante telle que silice, à l'état non lié c'est-à-dire non couplée à l'élastomère diénique, permet de réduire de manière sensible la vitesse de propagation de fissures ou d'entailles, en d'autres termes d'améliorer les propriétés de déchirabilité, offrant ainsi aux vulcanisats et aux pneumatiques les comportant, une longévité améliorée en raison d'une meilleure protection contre les effets d'un vieillissement thermo-oxydant.

**Tableau 1**

| Formulation des compositions de caoutchouc *(en pce)* : | C-1 | C-2 | C-3 |
|---|---|---|---|
| élastomère diénique (1) | 100 | 100 | 100 |
| noir de carbone (2) | 60 | 5 | 5 |
| silice (3) | 5 | 60 | 60 |
| agent de couplage silane (4) | - | 5.5 | - |
| composé de cobalt (5) | 2 | 2 | 2 |
| antioxydant (6) | 2.5 | 2.5 | 2.5 |
| acide stéarique | 0.2 | 0.2 | 0.2 |
| oxyde de zinc | 8 | 8 | 8 |
| soufre | 5 | 5 | 5 |
| accélérateur sulfénamide (7) | 0.7 | 0.7 | 0.7 |
| DPG (8) | 1.5 | 1.5 | 1.5 |
| agent antiréversion (9) | 2 | 2 | 2 |

| | | | |
|---|---|---|---|
| (1) caoutchouc naturel peptisé (« Aktiplast 8 » de Rhein Chemie) ; (2) N326 (dénomination selon norme ASTM D-1765) de Cabot; (3) « Ultrasil 7000 » de Evonik, type « HDS » (CTAB et BET : environ 160 m²/g) ; (4) agent de couplage TESPT (« Si69 » de la société Evonik) ; (5) tallate de cobalt ("Dicnate tallate" de DIC Synthetic Resins Company) ; (6) N-(1,3-diméthylbutyl)-N'-phényl-p-phénylènediamine ; ("Santoflex 6PPD" de la société Flexsys); (7) N-ter-butyl-2-benzothiazyle sulfénamide ("Nocceler NS-P" de Ouchi Shinko Chemical Ind. Company); (8) diphénylguanidine ("Perkacit DPG" de la société Flexsys) ; (9) hexaméthylènethiosulfate de sodium ("Duralink HTS" de la société Flexsys). | | | |

**Tableau 2**

| Composition : | C-1 | C-2 | C-3 |
|---|---|---|---|
| *Propriétés après cuisson:* | | | |
| E10 (MPa) | 9.5 | 8.0 | 9.5 |
| E100 (MPa) | 4.2 | 3.0 | 2.2 |
| E300 (MPa) | 4.0 | 2.4 | 1.6 |
| Contrainte à la rupture (MPa) | 26 | 25 | 25 |
| Allongement à la rupture (%) | 300 | 400 | 480 |

**Tableau 3**

| AR (allongement à la rupture en %) : | C-1 | C-2 | C-3 |
|---|---|---|---|
| à l'état initial (après cuisson) : | 300 *(100)* | 400 *(100)* | 480 *(100)* |
| après un vieillissement de 7 jours : | 225 *(75)* | 265 *(66)* | 390 *(81)* |
| après vieillissement de 19 jours : | 145 *(48)* | 185 *(46)* | 305 *(69)* |
| après vieillissement de 27 jours : | 130 *(43)* | 160 *(40)* | 275 *(57)* |
| *perte en % après 27 jours :* | *-57*% | *-60%* | *-43%* |

**Tableau 4**

| Vitesse de fissuration (nm/cycle) : | C-1 | C-2 | C-3 |
|---|---|---|---|
| à l'état initial (après cuisson) : | 50 | 6.5 | 2.5 |
| après un vieillissement de 7 jours : | 550 | 8.0 | 3.6 |
| après un vieillissement de 19 jours : | 9000 | 21 | 10 |
| après un vieillissement de 27 jours : | 28 000 | 130 | 18 |

## Revendications

1. Pneumatique comprenant une composition de caoutchouc interne comportant au moins (« pce » signifiant parties en poids pour cent parties d'élastomère) :
- 50 à 100 pce d'un élastomère isoprénique ;
- optionnellement, 0 à 50 pce d'un autre élastomère diénique ;
- 0 à moins de 15 pce d'un noir de carbone ;
- entre 40 et 100 pce d'une charge inorganique nanométrique,
**caractérisé en ce que** la composition de caoutchouc interne est dépourvue ou comporte moins de 2 %, exprimés par rapport au poids de charge inorganique nanométrique, d'agent de couplage (élastomère / charge inorganique).

2. Pneumatique selon la revendication 1, dans lequel l'autre élastomère diénique est un polybutadiène (BR) ou un copolymère de butadiène.

3. Pneumatique selon la revendication 2, dans lequel le copolymère de butadiène est à base de butadiène et de styrène.

4. Pneumatique selon la revendication 3, dans lequel le copolymère à base de butadiène et de styrène est choisi dans le groupe constitué par les copolymères styrène-butadiène (SBR), les copolymères styrène-butadiène-isoprène (SBIR) et les mélanges de tels copolymères.

5. Pneumatique selon la revendication 4, dans lequel le copolymère à base de butadiène et de styrène est un copolymère SBR.

6. Pneumatique selon l'une quelconque des revendications 1 à 5, comportant moins de 12 pce, de préférence 2 à 10 pce de noir de carbone.

7. Pneumatique selon l'une quelconque des revendications 1 à 6, dans lequel la charge inorganique nanométrique est une silice.

8. Pneumatique selon l'une quelconque des revendications 1 à 7, dans lequel le taux de charge inorganique nanométrique est compris entre 50 et 100 pce, de préférence entre 50 et 90 pce.

9. Pneumatique selon l'une quelconque des revendications 1 à 8, dans lequel le taux d'agent de couplage est inférieur à 1%, de préférence inférieur à 0,5%, par rapport au poids de charge inorganique nanométrique.

10. Pneumatique selon la revendication 9, dans lequel la composition interne est dépourvue d'agent de couplage.

11. Pneumatique selon l'une quelconque des revendications 1 à 10, la composition interne étant située dans la ceinture du pneumatique.

## Patentansprüche

1. Reifen, umfassend eine innere Kautschukzusammensetzung, umfassend mindestens (wobei "phe" Gewichtsteile pro hundert Teile Elastomer bedeutet):
- 50 bis 100 phe eines Isoprenelastomers;
- gegebenenfalls 0 bis 50 phe eines anderen Dienelastomers;
- 0 bis weniger als 15 phe Ruß;
- zwischen 40 und 100 phe eines nanoskaligen anorganischen Füllstoffs;
**dadurch gekennzeichnet, dass** die innere Zusammensetzung frei von (Elastomer/anorganischer Füllstoff)-Kupplungsmittel ist oder weniger als 2%, bezogen auf das Gewicht an nanoskaligem anorganischem Füllstoff, davon umfasst.

2. Reifen nach Anspruch 1, wobei es sich bei dem anderen Dienelastomer um ein Polybutadien (BR) oder ein Butadien-Copolymer handelt.

3. Reifen nach Anspruch 2, wobei das Butadien-Copolymer auf Butadien und Styrol basiert.

4. Reifen nach Anspruch 3, wobei das Copolymer auf Basis von Butadien und Styrol aus der Gruppe bestehend aus Styrol-Butadien-Copolymeren (SBR), Styrol-Butadien-Isopren-Copolymeren (SBIR) und Mischungen derartiger Copolymere ausgewählt ist.

5. Reifen nach Anspruch 4, wobei es sich bei dem Copolymer auf Basis von Butadien und Styrol um ein SBR-Copolymer handelt.

6. Reifen nach einem der Ansprüche 1 bis 5, umfassend weniger als 12 phe und vorzugsweise 2 bis 10 phe Ruß.

7. Reifen nach einem der Ansprüche 1 bis 6, wobei es sich bei dem nanoskaligen anorganischen Füllstoff um eine Kieselsäure handelt.

8. Reifen nach einem der Ansprüche 1 bis 7, wobei der Gehalt an nanoskaligem anorganischem Füllstoff zwischen 50 und 100 phe und vorzugsweise zwischen 50 und 90 phe liegt.

9. Reifen nach einem der Ansprüche 1 bis 8, wobei der Gehalt an Kupplungsmittel weniger als 1% und vorzugsweise weniger als 0,5%, bezogen auf das Gewicht des nanoskaligen anorganischen Füllstoffs, beträgt.

10. Reifen nach Anspruch 9, wobei die innere Zusammensetzung frei von Kupplungsmittel ist.

11. Reifen nach einem der Ansprüche 1 bis 10, wobei sich die interne Zusammensetzung im Gürtel des Reifens befindet.

## Claims

1. Tyre comprising an internal rubber composition comprising at least (where "phr" means parts by weight per hundred parts of elastomer):
- 50 to 100 phr of an isoprene elastomer;
- optionally, 0 to 50 phr of another diene elastomer;
- 0 to less than 15 phr of a carbon black;
- between 40 and 100 phr of a nanoscale inorganic filler,
**characterized in that** the internal rubber composition is free from or comprises less than 2%, expressed relative to the weight of nanoscale inorganic filler, of (elastomer/inorganic filler) coupling agent.

2. Tyre according to Claim 1, in which the other diene elastomer is a polybutadiene (BR) or a butadiene copolymer.

3. Tyre according to Claim 2, in which the butadiene copolymer is based on butadiene and styrene.

4. Tyre according to Claim 3, in which the copolymer based on butadiene and styrene is selected from the group consisting of styrene-butadiene copolymers (SBR), styrene-butadiene-isoprene copolymers (SBIR) and mixtures of such copolymers.

5. Tyre according to Claim 4, in which the copolymer based on butadiene and styrene is an SBR copolymer.

6. Tyre according to any one of Claims 1 to 5, comprising less than 12 phr, preferably from 2 to 10 phr, of carbon black.

7. Tyre according to any one of Claims 1 to 6, in which the nanoscale inorganic filler is a silica.

8. Tyre according to any one of Claims 1 to 7, in which the content of nanoscale inorganic filler is between 50 and 100 phr, preferably between 50 and 90 phr.

9. Tyre according to any one of Claims 1 to 8, in which the content of coupling agent is less than 1%, preferably less than 0.5%, relative to the weight of nanoscale inorganic filler.

10. Tyre according to Claim 9, in which the internal composition is free from coupling agent.

11. Tyre according to any one of Claims 1 to 10, the internal composition being situated in the belt of the tyre.
